# EUROPEAN PATENT SPECIFICATION

(11) **EP 2 100 503 B1**
(45) Date of publication and mention of the grant of the patent: **06.06.2012**
(21) Application number: 09154695.2
(22) Date of filing: 10.03.2009
(51) Int. Cl.: A01M 1/04

(54) **Insect trap**
Insektenfalle
Piège à insectes

(30) Priority: 10.03.2008 GB 0804382
(43) Date of publication of application: 16.09.2009
(73) Proprietor: P & L Systems Limited, Knaresborough Harrogate, Yorkshire HG5 8QB (GB)
(72) Inventor: Holmes, Tom, Harrogate, Yorkshire HG5 8QB (GB)
(74) Representative: Smithson, Robert Alan

(56) References cited:
- DE-U1-202008 011 307
- FR-A- 2 900 793
- US-A- 1 505 651
- US-A- 1 982 123
- US-A- 2 029 989
- US-A- 5 274 609
- US-A1- 2006 107 583

## Description

The invention relates to an insect trap. Particularly, but not exclusively, the invention relates to an insect trap incorporating illumination means for attracting insects.

Insect traps incorporating illumination means, for example, an ultraviolet light (UV), are known. The illumination means is arranged to allow light to be emitted from the trap in a range of directions. In so doing, there is an increased likelihood of luring and therefore catching an insect.

However, such traps have the associated disadvantage that the light, particularly UV light, from the trap may shine directly onto an adjacent surface and cause damage to the surface. This arises because the wavelength of UV light is shorter than visible light and as such can penetrate the protective membrane of many materials. With prolonged exposure to a UV light source, the UV will both discolour and break down the physical structure of materials including fabric, paint, plastics, wood and varnish. Typical implications of this include a substantial 'yellowing' or similar discolouring of the materials, and a reduction in the structural strength of the material, resulting in a weakening, cracking or even crumbling of the material.

It is a known advantage to provide an insect trap which is configured to allow UV light to reflect off a surface, for example, a wall. This is because the total UV light output effect of the insect trap is enhanced, by utilizing both direct and reflected light. Reflected light is also often seen as a more discreet means of attracting flying insects by providing a lure for the flying insect without the sometimes aggressive light produced from direct viewing of the UV light.

There is thus a choice of two distinct traps available; those which are designed to emit direct UV light, and those which are more discreet in their assembly and which utilize reflected UV light. Disadvantageously, a user is forced to choose between either a discreet 'reflected light' product or to use a direct light product. Regardless of his choice, the user must be cautious about the type of surface on which the trap will be mounted because of the damaging effects of the UV light.

US 5274609 discloses a portable lantern comprising a glass globe. Doors are provided on the globe operable to shield and prevent wind from blowing out the lantern flame in a first position, and to allow insects to enter into the globe instead of forming on the globe surface, in a second position.

It is an object of the invention to provide an insect trap which aims to overcome the aforementioned problems.

According to an aspect of the present invention there is provided an insect trap comprising a body and illumination means for attracting insects, the body comprising closing means operable to substantially block light from the illumination means being emitted from the insect trap.

The body comprises openings through which light from the illumination means is emitted from the insect trap. Preferably, the at least one opening is substantially between 10mm and 50mm in width, most preferably substantially 25mm. Preferably, the at least one opening is substantially between 100mm and 200mm in length, most preferably, 300mm in length. Preferably, the at least one opening has the dimensions substantially 25mm by 300mm.

Each opening is located in a side portion of the body. The body comprises two side portions, each side portion comprises at least one opening. A closing means is provided adjacent each opening.

Preferably, the closing means comprises at least one door. Preferably, the or each door is rotatably mounted on the body. Preferably, the or each door is operable to rotate substantially between about 0 and 360 degrees, preferably substantially between about 0 and 180 degrees, most preferably about 90 degrees.

Preferably, the illumination means is mounted behind said doors.

Preferably, the closing means is operable to move between a first position whereby light from the illumination means is able to exit the insect trap and a second position whereby light from the illumination means is substantially blocked from being emitted from the insect trap. Preferably, in a first position, the or each door is in an open configuration. Preferably, in this configuration, the or each door is rotated through 90 degrees such that the or each door lies substantially parallel to the front portion and/or the back portion of the insect trap. In this configuration, light from the illumination means can pass through the openings and can shine directly out of the trap and/or be reflected off the mounting surface, or wall.

Preferably, in a second position, the or each door is in a closed configuration. In this configuration, the or each door is rotated a further 90 degrees from the first position. In the second position, the or each door lies substantially perpendicular to the front portion and/or the back portion. In this configuration, light from the illumination means is substantially prevented from being emitted through the openings.

Preferably, switching means for operating the closing means are provided on the body. Preferably, the switching means are located on a top portion of the body. Preferably, two switching means are provided, preferably each being located on opposite sides of the top portion. Preferably, each switching means is operable to independently rotate an adjacent closing means.

Provision of an insect trap having doors which can be turned through 90 degrees to be in either an open or closed position is advantageous because the user has the choice to allow light to be emitted from the trap or not. In the open position, UV light is allowed to escape the insect trap, providing both direct UV light out of the side opening of the trap and reflected UV light off the mounting wall. In the closed position, the UV light is substantially prevented from escaping from the trap, ensuring no damaging UV light is shone onto the wall. This is hugely advantageous if the product has been installed against sensitive materials.

Preferably, the illumination means comprise a UV light source, preferably a UV-A light source. The illumination means may comprise a plurality of light tubes, preferably UV light tubes. Preferably, the or each light tube is arranged parallel to the longitudinal axis of the trap, preferably, a front portion of said trap, preferably in a spaced arrangement. The or each light may be arranged perpendicular to the longitudinal axis of the trap. Preferably, the or each light tube emits light having a wavelength 350nm to 370nm.

Preferably, immobilisation means are provided on the insect trap. Preferably, the immobilisation means comprise a flexible substrate. Preferably, the immobilisation means comprise an adhesive board. The adhesive board may be adapted to retain insects on the board. Alternatively or additionally, the immobilisation means may comprise electrocution means operable to electrocute an insect coming into contact therewith.

The insect trap may include a reflector, preferably located between the illumination means and a surface to which the insect trap is attached.

All of the features described herein may be combined with any of the above aspects, in any combination.

An embodiment of the invention will now be described, by way of example only, with reference to the accompanying drawings, wherein:
Figure 1 shows a schematic perspective view of an insect trap according to the invention;
Figure 2 shows a schematic perspective rear view of an insect trap according to the invention;
Figure 3 shows a schematic side view of an insect trap according to the invention;
Figure 4 shows a schematic front view of a part of an insect trap according to the invention;
Figure 5 shows a schematic top view of an insect trap according to the invention;
Figure 6 shows a schematic rear view of an insect trap according to the invention;
Figure 7 shows a schematic sectional top view of an insect trap in a first position according to the invention; and
Figure 8 shows a schematic sectional top view of an insect trap in a second position according to the invention.

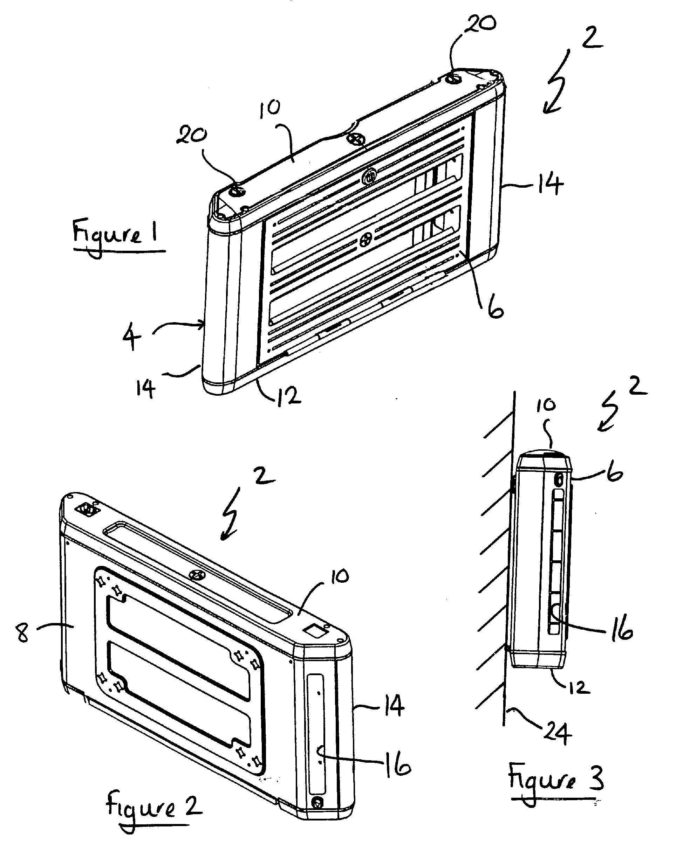

Figure 1 shows an insect trap 2 according to the invention. The insect trap 2 comprises a body 4 having a front portion 6, a back portion 8, a top portion 10, and a bottom portion 12. Said portions are joined together by side portions 14 which slope outwardly from the back portion 8 to join the front portion 6. The front portion 6 comprises a grill which shields illumination means 15 located in the body 4 and prevents a user from accidently touching the internal parts of the insect trap 2.

The illumination means 15 comprise UV light tubes, for example, UV-A light tubes. The light tubes 15 are arranged parallel to the longitudinal axis of the front portion 6, in a spaced arrangement. The UV light tubes emit light in the wavelength 350nm to 370nm.

As shown most clearly in Figures 2, 3 and 6, an opening 16 is provided in both the side portions 14. Each opening 16 is generally rectangular in shape and extends downwardly from a top part to a bottom part of each side portion 14. Each opening is 25mm by 300mm in dimensions, being so dimensioned to allow the light from the illumination means 15 to pass therethrough. Although two openings 16 are shown in the figures, it will be understood that a plurality of openings 16 may be provided along the length of each side portion 14.

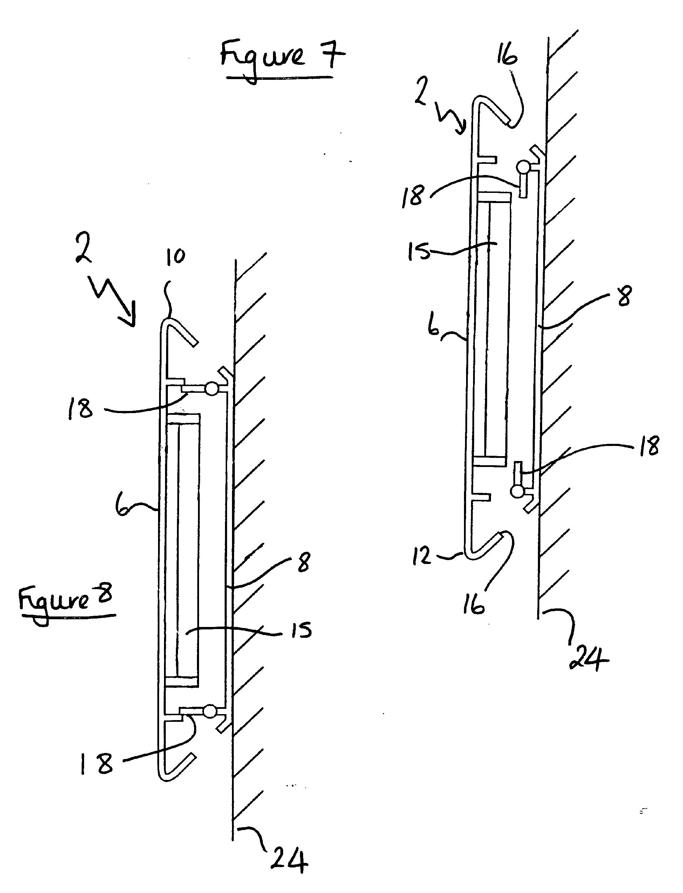

Figures 7 and 8 show sectional top views of the insect trap 2. It can be seen that doors 18 are located on the body 4. The doors 18 are rotatably mounted so as to allow said doors 18 to move through 90 degrees.

Figure 7 shows the doors 18 in a first position. In the first position, each door 18 is in an open configuration in which said door 18 lies generally parallel to the back portion 8 of the body 4. In this configuration, light from the tubes 15 is emitted through the openings 16 to shine directly out of the trap 2 and to be reflected off a support surface 24.

Figure 8 shows the doors 18 in a second position. In the second position, each door 18 is in a closed configuration in which said door 18 lies generally perpendicular to the back portion 8. In this configuration, light from the tubes 15 is prevented form being emitted through the openings 16.

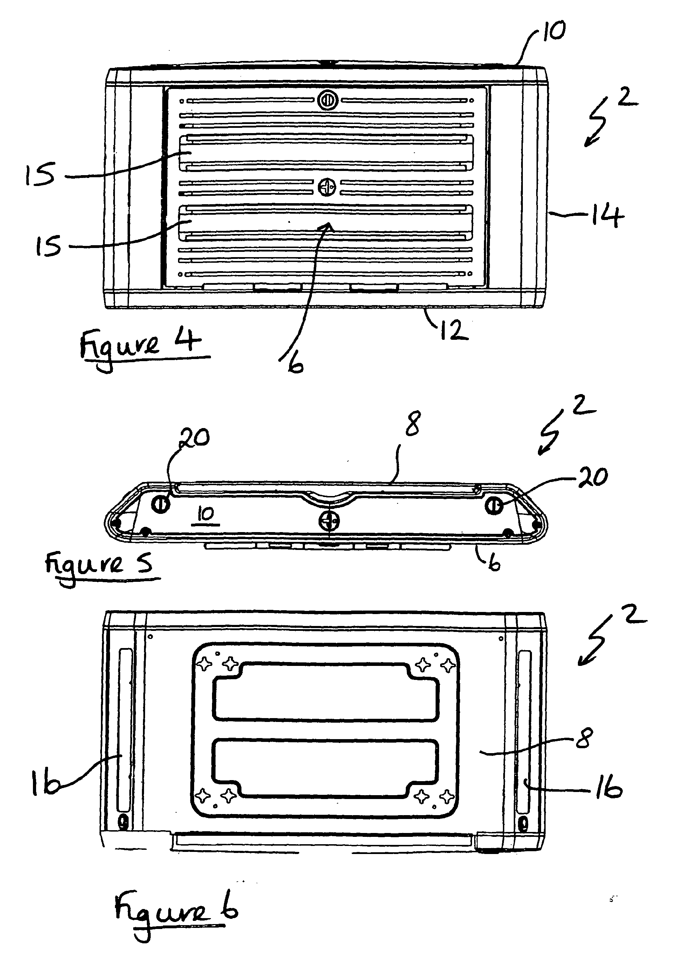

The doors 18 are turned through 90 degrees by operation of a switch 20. Two switches 20 are shown in Figure 5 being located on the top portion 10 of the body 4. Each switch 10 is configured to operate the adjacent door 18.

The apparatus 2 is shown mounted to the support surface 24. The support surface 24 may be a wall or a ceiling. The apparatus 2 is mounted on stand offs or feet, through which screws hold the apparatus 2 in place. The feet space the apparatus 2 from the support surface 24.

In use, the user has the option of choosing whether to allow light to be emitted through the openings 16 or not. When the insect trap 2 is installed against sensitive materials, such as wallpaper, painted walls, wood, plastics etc, which would discolour and/or crack, weaken or crumble when subjected to continual UV light, the user can choose to close the doors 18. In this closed position, the doors 18 are in the second position and so the UV light is prevented from escaping from the side openings 16 of the trap 2. This ensures no damaging UV light shines onto the wall 24. This is hugely advantageous.

Alternatively, if the insect trap 2 is mounted on a surface which is not prone to light damage, the doors 18 are switched to the first position, or open position. In the open position, UV light is allowed to escape the trap 2, providing both direct UV light out of the side portions 16 and reflected UV light off the wall 24.

Advantageously, the insect trap of the present invention allows the user to choose whether to allow the light to escape from the side portions 16 of the trap 2, to achieve direct and reflected light, or to rely purely on the front elevation direct light. In so doing, the trap can be used in many alternative environments, for example, it is suitable for both an industrial or domestic application.

In an alternative arrangement, insect immobilisation means, for example, a glue board or sticky board, may be incorporated into the insect trap 2, either alone or alongside the illumination means 15. The immobilisation means comprises a "sticky" surface which the insect adheres to. Again, by operation of the doors 18, the user can choose whether to open or close the side openings 16.

The invention is not restricted to the details of the foregoing embodiment(s). The invention is defined by the accompanying claims,

## Claims

1. An insect trap 2 comprising a body 4 and an illumination means 15 for attracting insects, the body 4 comprising closing means 18 operable to substantially block light from the illumination means 15 being emitted from the insect trap 2, **characterised in that** the trap further comprises a first side portion 14 and a second side portion 14, said side portions 14 being located remote from each other on the body 4, each said side portion 14 comprising at least one opening 16 through which light from the illumination means 15 is emitted from the insect trap 2, and **characterised in that** the trap further comprises **in that** the closing means 18 is provided adjacent each said opening 16.

2. An insect trap as claimed in claim 1, **characterised in that** the or each closing means 18 is rotatably mounted on the body 4, and the or each closing means 18 is preferably operable to rotate substantially about 90 degrees.

3. An insect trap as claimed in any one of the preceding claims, **characterised in that** the illumination means 15 is mounted behind said closing means 18.

4. An insect trap as claimed in any one of the preceding claims, **characterised in that** the closing means 18 is operable to move between a first position whereby light from the illumination means 15 is able to exit the insect trap 2 and a second position whereby light from the illumination means 15 is substantially blocked from being emitted from the insect trap 2.

5. An insect trap as claimed in claim 4, **characterised in that** in a first position, the or each closing means 18 is in an open configuration, in said first position, the or each closing means 18 is operable to rotate through 90 degrees such that the or each closing means 18 lies substantially parallel to the front portion and/or the back portion of the insect trap.

6. An insect trap as claimed in claim 4 or 5, **characterised in that** in a second position, the or each closing means 18 is in a closed configuration, and in the second position, the or each closing means 18 lies substantially perpendicular to the front portion and/or the back portion.

7. An insect trap as claimed in any one of the preceding claims, **characterised in that** the illumination means 15 comprises at least one UV light source, the or each light tube being arranged parallel to the longitudinal axis of the trap.

8. An insect trap as claimed in any one of the preceding claims, **characterised in that** an immobilisation means is provided on the insect trap, the immobilisation means comprising an adhesive board.

## Patentansprüche

1. Insektenfalle 2, die einen Körper 4 und Beleuchtungsmittel 15, um Insekten anzuziehen, umfasst, wobei der Körper 4 Verschlussmittel 18 umfasst, die betreibbar sind, um im Wesentlichen zu verhindern, dass Licht von den Beleuchtungsmitteln 15 von der Insektenfalle 2 ausgesendet wird, **dadurch gekennzeichnet, dass** die Falle ferner einen ersten Seitenabschnitt 14 und einen zweiten Seitenabschnitt 14 aufweist, wobei sich die Seitenabschnitte 14 am Körper 4 voneinander entfernt befinden, wobei jeder Seitenabschnitt 14 wenigstens eine Öffnung 16 aufweist, durch die Licht von den Beleuchtungsmitteln 15 von der Insektenfalle 2 ausgesendet wird, und dass die Verschlussmittel 18 in der Nähe jeder Öffnung 16 vorgesehen sind.

2. Insektenfalle nach Anspruch 1, **dadurch gekennzeichnet, dass** das oder jedes Verschlussmittel 18 am Körper 4 drehbar montiert ist und das oder jedes Verschlussmittel 18 vorzugsweise betreibbar ist, um sich um im Wesentlichen 90 Grad zu drehen.

3. Insektenfalle nach einem der vorhergehenden Ansprüche, **dadurch gekennzeichnet, dass** die Beleuchtungsmittel 15 hinter den Verschlussmitteln 18 montiert sind.

4. Insektenfalle nach einem der vorhergehenden Ansprüche, **dadurch gekennzeichnet, dass** die Verschlussmittel 18 betreibbar sind, um sich zwischen einer ersten Position, in der Licht von den Beleuchtungsmitteln 15 die Insektenfalle 2 verlassen kann, und einer zweiten Position, in der Licht von den Beleuchtungsmitteln 15 im Wesentlichen daran gehindert wird, von der Insektenfalle 2 ausgesendet zu werden, zu bewegen.

5. Insektenfalle nach Anspruch 4, **dadurch gekennzeichnet, dass** in einer ersten Position das oder jedes Verschlussmittel 18 in einer geöffneten Konfiguration ist und in der ersten Position das oder jedes Verschlussmittel 18 betreibbar ist, um sich um 90 Grad zu drehen, so dass das oder jedes Verschlussmittel 18 im Wesentlichen parallel zu dem vorderen Abschnitt und/oder dem hinteren Abschnitt der Insektenfalle liegt.

6. Insektenfalle nach Anspruch 4 oder 5, **dadurch gekennzeichnet, dass** in einer zweiten Position das oder jedes Verschlussmittel 18 in einer geschlossenen Konfiguration ist und in der zweiten Position das oder jedes Verschlussmittel 18 im Wesentlichen senkrecht zu dem vorderen Abschnitt und/oder dem hinteren Abschnitt liegt.

7. Insektenfalle nach einem der vorhergehenden Ansprüche, **dadurch gekennzeichnet, dass** die Beleuchtungsmittel 15 wenigstens eine UV-Lichtquelle umfassen, wobei die oder jede Lichtröhre parallel zu der Längsachse der Falle angeordnet ist.

8. Insektenfalle nach einem der vorhergehenden Ansprüche, **dadurch gekennzeichnet, dass** an der Insektenfalle ein Immobilisierungsmittel vorgesehen ist, wobei das Immobilisierungsmittel eine Klebstoffplatte aufweist.

## Revendications

1. Piège à insectes 2 comprenant un corps 4 et un moyen d'éclairage 15 pour attirer les insectes, le corps 4 comprenant un moyen de fermeture 18 pouvant fonctionner pour bloquer substantiellement la lumière provenant du moyen d'éclairage 15 et émise depuis le piège à insectes 2, **caractérisé en ce que** le piège comprend en outre une première portion latérale 14 et une deuxième portion latérale 14, lesdites portions latérales 14 étant situées à distance l'une de l'autre sur le corps 4, chaque dite portion latérale 14 comprenant au moins une ouverture 16 à travers laquelle la lumière provenant du moyen d'éclairage 15 est émise depuis le piège à insectes 2, et **en ce que** le moyen de fermeture 18 est prévu à côté de chaque dite ouverture 16.

2. Piège à insectes selon la revendication 1, **caractérisé en ce que** le ou chaque moyen de fermeture 18 est monté à rotation sur le corps 4, et le ou chaque moyen de fermeture 18 peut fonctionner de préférence de manière à tourner substantiellement sur 90 degrés.

3. Piège à insectes selon l'une quelconque des revendications précédentes, **caractérisé en ce que** le moyen d'éclairage 15 est monté derrière ledit moyen de fermeture 18.

4. Piège à insectes selon l'une quelconque des revendications précédentes, **caractérisé en ce que** le moyen de fermeture 18 peut fonctionner de manière à se déplacer entre une première position dans laquelle la lumière provenant du moyen d'éclairage 15 peut sortir du piège à insectes 2 et une deuxième position dans laquelle la lumière provenant du moyen d'éclairage 15 est substantiellement bloquée pour l'empêcher d'être émise depuis le piège à insectes 2.

5. Piège à insectes selon la revendication 4, **caractérisé en ce que** dans une première position, le ou chaque moyen de fermeture 18 est dans une configuration ouverte, et dans ladite première position, le ou chaque moyen de fermeture 18 peut fonctionner de manière à tourner de 90 degrés de telle sorte que le ou chaque moyen de fermeture 18 se situe substantiellement parallèlement à la portion avant et/ou à la portion arrière du piège à insectes.

6. Piège à insectes selon la revendication 4 ou 5, **caractérisé en ce que** dans une deuxième position, le ou chaque moyen de fermeture 18 est dans une configuration fermée, et dans la deuxième position, le ou chaque moyen de fermeture 18 se situe substantiellement perpendiculairement à la portion avant et/ou à la portion arrière.

7. Piège à insectes selon l'une quelconque des revendications précédentes, **caractérisé en ce que** le moyen d'éclairage 15 comprend au moins une source de lumière UV, le ou chaque tube lumineux étant agencés parallèlement à l'axe longitudinal du piège.

8. Piège à insectes selon l'une quelconque des revendications précédentes, **caractérisé en ce qu'**un moyen d'immobilisation est prévu sur le piège à insectes, le moyen d'immobilisation comprenant une plaque adhésive.
